(19) Europäisches Patentamt

European Patent Office

Office européen des brevets

(11) EP 0 797 742 B1

(12) **EUROPÄISCHE PATENTSCHRIFT**

(45) Veröffentlichungstag und Bekanntmachung des Hinweises auf die Patenterteilung:
**28.04.1999 Patentblatt 1999/17**

(21) Anmeldenummer: **95942645.3**

(22) Anmeldetag: **23.12.1995**

(51) Int Cl.$^6$: **F16H 61/38**, B60K 41/14

(86) Internationale Anmeldenummer:
**PCT/DE95/01856**

(87) Internationale Veröffentlichungsnummer:
**WO 96/20364 (04.07.1996 Gazette 1996/30)**

(54) **SYSTEM ZUR EINSTELLUNG DER SPANNUNG DES UMSCHLINGUNGSTEILS EINES UMSCHLINGUNGSGETRIEBES**

SYSTEM FOR ADJUSTING THE TENSION OF THE CONTACT PART OF A BELT DRIVE MECHANISM

SYSTEME DE REGLAGE DE LA TENSION DE LA PIECE DE CONTACT D'UNE TRANSMISSION A VARIATION CONTINUE A COURROIE

(84) Benannte Vertragsstaaten:
**DE FR GB NL**

(30) Priorität: **28.12.1994 DE 4447034**

(43) Veröffentlichungstag der Anmeldung:
**01.10.1997 Patentblatt 1997/40**

(73) Patentinhaber: **ROBERT BOSCH GMBH**
**70442 Stuttgart (DE)**

(72) Erfinder:
- **REUSCHENBACH, Lutz**
 **D-70469 Stuttgart (DE)**
- **SENGER, Karl-Heinz**
 **D-74369 Löchgau (DE)**
- **LUH, Joachim**
 **D-74321 Bietigheim-Bissingen (DE)**
- **LUYCKX, Johan**
 **NL-3740 Bilzen (NL)**
- **PELDERS, Riné**
 **NL-5231 PK 's-Hertogenbosch (NL)**

(56) Entgegenhaltungen:
EP-A- 0 510 590    DE-A- 3 812 673
DE-A- 4 239 711    US-A- 4 736 301
US-A- 5 243 881

- **PATENT ABSTRACTS OF JAPAN vol. 13, no. 385 (M-864), 25. August 1989 & JP,A,01 136837 (DAIHATSU), 30. Mai 1989,**

**Beschreibung**

Stand der Technik

Die Erfindung betrifft ein System zur Einstellung der Spannung des Umschlingungsteils nach dem Oberbegriff des Anspruchs 1 und 2.

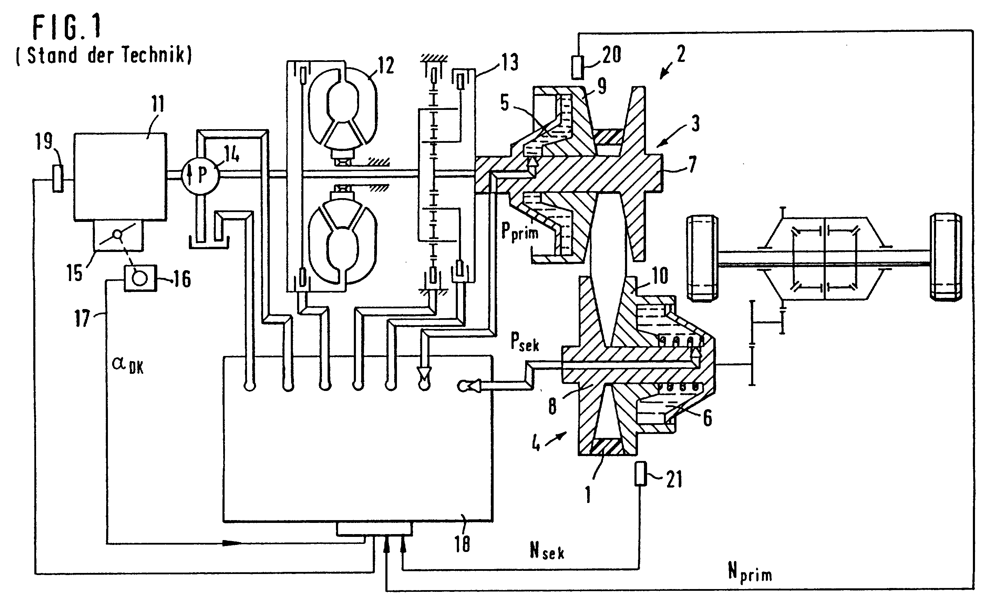

Ein beispielsweise aus der EP,A1,0 451 887 bekanntes system wird in der Figur 1 beschrieben. Auch diese Schrift betrifft die Einstellung der Spannung eines Umschlingungsmittels (1), im allgemeinen ein Band, in einem stufenlosen Umschlingungsgetriebe (2), bestehend aus dem Umschlingungsmittel (1), einer Antriebsscheibe (3) und einer Abtriebsscheibe (4), welches von einem Motor (11) angetrieben wird.

Zur Einstellung der Übersetzung des stufenlosen Umschlingungsgetriebes und der Spannung des Umschlingungsmittels (1) bestehen die Antriebsscheibe (3) und Abtriebsscheibe (4) aus je einer axial feststehenden (7) bzw. (8) und einer axial beweglichen Kegelscheibe (9) bzw. (10). Die Antriebsscheibe (3) wird auch als Primärscheibe und die Abtriebsscheibe (4) auch als Sekundärscheibe bezeichnet. Die Anpressung der axial beweglichen Kegelscheiben (9) bzw. (10) gegen das Umschlingungsmittel (1) erfolgt durch Aufbau eines hydraulischen Drucks in den Ölkammern (5) bzw. (6). Durch eine geeignete Wahl der Anpreßdrücke $P_{prim}$ und $P_{sek}$ in den Ölkammern (5) und (6) kann die gewünschte Übersetzung des stufenlosen Umschlingungsgetriebes und die erforderliche Spannung des Umschlingungsmittels (1) eingestellt werden. Für die Kraftübertragung vom Motor (11) zur Antriebsscheibe (3) kann z.B. ein Drehmomentenwandler (12) und ein Planetensatz (13) mit Kupplungen für Vorwärts- und Rückwärtsfahrt vorhanden sein. Der Motor (11) kann auch die Pumpe (14) des stufenlosen Umschlingungsgetriebes antreiben. Eine Getriebesteuerung (18) beinhaltet die elektrischen und hydraulischen Komponenten zur Ansteuerung des stufenlosen Umschlingungsgetriebes. Die Getriebesteuerung (18) enthält Mittel zur Einstellung des Drucks in der Ölkammer (6) oder aber in den Ölkammern (5) und (6).

In einer Ausführung der Getriebesteuerung (18) wird mit dem Druck $P_{sek}$ in der abtriebsseitigen Ölkammer (6) die Spannung des Umschlingungsmittels (1) eingestellt.

Die Spannung des Umschlingungsmittels (1) ist so einzustellen, daß der Wirkungsgrad des stufenlosen Umschlingungsgetriebes maximal ist. Es ist dabei einerseits zu verhindern, daß das Umschlingungsmittel (1) durch eine zu kleine Spannung durchrutscht und andererseits soll die Spannung des Umschlingungsmittels (1) nicht zu hoch sein, um hohe Verluste im stufenlosen Umschlingungsgetriebe zu vermeiden. Um beide Anforderungen in Einklang bringen zu können, muß das von der Antriebsscheibe (3) auf die Abtriebsscheibe (4) übertragene Drehmoment möglichst genau bekannt sein. Das zu übertragende Drehmoment an der Antriebsscheibe (3) wird dabei hauptsächlich von dem Drehmoment des Motors (11 ) und dem Drehmomentenverstärkungsfaktor des Drehmomentenwandlers (12) bestimmt.

In EP,A1,0 451 887 wird ein Verfahren zur Einstellung des Drucks $P_{sek}$ in der abtriebsseitigen Ölkammer (6) beschrieben. Bei diesem Verfahren wird der Drehwinkel ($\alpha_{Dk}$) der Drosselklappe (15) des Motors (11) mit einem Sensor (16) erfaßt. Weiterhin wird die Drehzahl ($N_{mot}$) des Motors (11), die Drehzahl ($N_{prim}$) der Primärscheibe (3) und die Drehzahl ($N_{sek}$) der Sekundärscheibe (4) mit Drehzahlsensoren (19), (20) und (21) gemessen und als entsprechende Signale an die Getriebesteuerung (18) weitergeleitet. Die mit dem Sensor (16) gemessene Winkellage ($\alpha_{Dk}$) der Drosselklappe, die Motordrehzahl ($N_{mot}$), die Primärdrehzahl ($N_{prim}$) und die Sekundärdrehzahl ($N_{sek}$) werden in der Getriebesteuerung (18) zur Einstellung der Spannung des Umschlingungsmittels (1) durch Einstellen des Drucks in der Ölkammer (6) verwendet.

Zur Einstellung der Spannung des Umschlingungsmittels (1) wird mit einem Kennfeld aus dem Drosselklappenwinkel und der Motordrehzahl das zu erwartende Motordrehmoment abgeschätzt. Das zu erwartende Motordrehmoment wird mit dem gebildeten Quotienten aus der Primärdrehzahl und der Motordrehzahl in einem Kennfeld in ein erwartetes Primärdrehmoment umgerechnet. Anschließend erfolgt die Berechnung des erforderlichen Drucks $P_{sek}$ in der abtriebsseitigen Ölkammer zur Einstellung der Spannung des Umschlingungselements (1).

Die Verwendung des Drosselklappenwinkels ($\alpha_{Dk}$) zur Abschätzung des Motormoments hat den Nachteil, daß der Abgleich des Drosselklappenpotentiometers sehr genau erfolgen muß. Bereits eine kleine Abweichung des gemessenen Drosselklappenwinkels von dem tatsächlichen Drosselklappenwinkel kann bei obigem Verfahren zu einer erheblichen Abweichung zwischen dem erwarteten Motordrehmoment und dem tatsächlichen Motordrehmoment führen. Da es schwierig ist, zu garantieren, daß der Drosselklappenwinkel immer richtig gemessen wird, muß die Bandspannung mit einer höheren Sicherheitsreserve über dem erforderlichen Niveau gehalten werden, indem ein um den Reservedruck höherer Druck in der abtriebsseitigen Ölkammer eingestellt wird. Das führt zu höheren Verlusten im Getriebe und in der Pumpe. Darüber hinaus kann es zu Problemen bei der Abschätzung des Motormoments während dynamischer Fahrzuständen mit größeren zeitlichen Änderungen der Motordrehzahl kommen.

Die US,A,4,736,301 die die Merkmale des Oberbegriffs der unabh. Ansprüche 1 und 2 beinhaltet, zeigt ein stufenlos verstellbares Umschlingungsgetriebe, bei dem die Spannung des Umschlingungsteils abhängig von einem das Motormoment des Fahrzeugmotors repräsentierenden Signal eingestellt wird.

Die DE,A1,42 39 711 beschreibt eine Momentenschnittstelle, durch die zwischen der Motorsteuerung und der Getriebesteuerung im wesentlichen unterschiedliche Momente übertragen werden.

Die Aufgabe der Erfindung besteht in der optimalen Ausgestaltung der Schnittstelle zwischen Motorsteuerung und Bandspannungseinstellung und der damit erzielbaren genaueren Einstellung der Spannung des Umschlingungsteils und damit der Verbesserung des Wirkungsgrades des Getriebes.

Diese Aufgabe wird durch die kennzeichnenden Merkmale der Ansprüche 1 und 2 gelöst.

Vorteile der Erfindung

Wie schon erwähnt geht die Erfindung aus von einem System zur Einstellung der Spannung des Umschlingungsteils eines, vorzugsweise in seiner Übersetzung stufenlos verstellbaren, Umschlingungsgetriebes. Die Spannung wird dabei abhängig von Betriebsparametern des Fahrzeugmotors eingestellt, wobei als Betriebsparameter des Fahrzeugmotors ein das Motormoment repräsentierendes Signal herangezogen wird.

Erfindungsgemäß ist vorgesehen, daß von den ersten Mitteln (Motorsteuerung) zu den zweiten Mitteln (Getriebesteuerung) ein erstes Signal geführt wird, das die dem Fahrzeugmotor zugeführte Luftmasse bzw. Luftmenge repräsentiert. Darüber hinaus ist vorgesehen, daß von den ersten Mitteln (Motorsteuerung) zu den zweiten Mitteln (Getriebesteuerung) neben dem ersten Signal (Luftmasse bzw. Luftmenge) ein zweites Signal geführt wird, das den Zündwinkel bzw. den Zündzeitpunkt des Fahrzeugmotor repräsentiert. Aus dem ersten und zweiten Signal wird dann das das Motormoment repräsentierende Signal zur Einstellung der Spannung abgeleitet.

Während die zuletzt aufgeführten Variante die Ermittlung des tatsächlich zu erwartenden Motormoments bei Ottomotoren betrifft, ist beispielsweise bei Dieselmotoren vorgesehen, daß von dem Motorsteuergerät zu dem Getriebesteuergerät ein erstes Signal geführt wird, das die dem Fahrzeugmotor zugeführte Kraftstoffmenge repräsentiert. Darüber hinaus ist vorgesehen, daß von dem Motorsteuergerät zu dem Getriebesteuergerät ein zweites Signal geführt wird, das den Zeitpunkt repräsentiert, zu dem der Kraftstoff eingespritzt wird. Aus dem ersten und zweiten Signal wird dann das das Motormoment repräsentierende Signal zur Einstellung der Spannung abgeleitet.

In einer vorteilhaften Ausgestaltung der Erfindung ist vorgesehen, daß als Betriebsparameter des Fahrzeugmotors ein das stationäre Motormoment repräsentierendes Signal herangezogen wird. Hierunter soll das zu erwartende Motormoment bei einer im wesentlichen zeitlich konstanten Motordrehzahl verstanden werden. Diese Ausgestaltung hat den Vorteil, daß diese Größe relativ einfach zu ermitteln ist und im allgemeinen in einem Motorsteuerungsgerät vorliegt.

Besonders vorteilhaft ist es, daß als Betriebsparameter des Fahrzeugmotors ein das dynamische Motormoment repräsentierendes Signal herangezogen wird. Hierdurch gelangt man auch während sehr dynamischer Fahrzustände, in denen sich die Motordrehzahl zeitlich relativ stark ändert, zu einer optimalen Anpassung der Bandspannung.

Zur Erlangung des dynamischen Motormoments kann vorgesehen sein, daß ein die Drehzahl des Fahrzeugmotors repräsentierendes Signal erfaßt wird und daß das dynamische Motormoment repräsentierende Signal unter Berücksichtigung der zeitlichen Änderung des die Drehzahl des Fahrzeugmotors repräsentierenden Signals ermittelt wird. Darüber hinaus kann zur Ermittlung des das dynamische Motormoment repräsentierenden Signals eine die Trägheit des Fahrzeugmotors repräsentierende Größe berücksichtigt werden.

Die Spannung des Umschlingungsteils geschieht mittels einer Druckbeaufschlagung wenigstens einer Druckkammer.

Zusammenfassend kann gesagt werden, daß die Erfindung ein Verfahren zur Einstellung der Spannung des Umschlingungsmittels, bei dem eine höhere Genauigkeit der Abschätzung des zu erwartenden Motordrehmoments und somit eine bessere Dosierung der Spannung erreicht wird, beinhaltet. Zu diesem Zweck werden von der Motorsteuerung, die den Verbrennungsmotor steuert, Signale zur Verfügung gestellt, die eine genaue Abschätzung des Motordrehmoments ermöglichen. Diese Signale repräsentieren die Menge der vom Verbrennungsmotor angesaugten Luftmasse (oder die dem Motor zugeführte Kraftstoffmenge), bzw. ein daraus abgeleitetes Signal, und der Zündwinkel des Verbrennungsmotors (oder der Einspritzzeitpunkt). Durch die genauere Abschätzung des Motordrehmoments kann die Spannung des Umschlingungsmittels verringert werden, so daß sich ein verbesserter Getriebewirkungsgrad ergibt.

Weitere vorteilhafte Ausgestaltungen sind den Unteransprüchen zu entnehmen.

Zeichnung

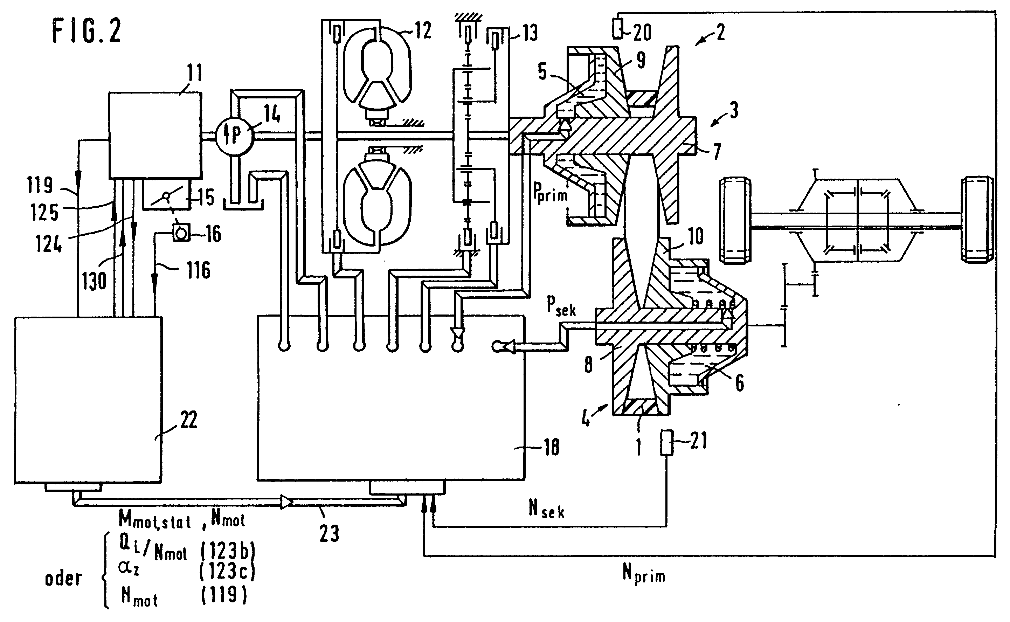

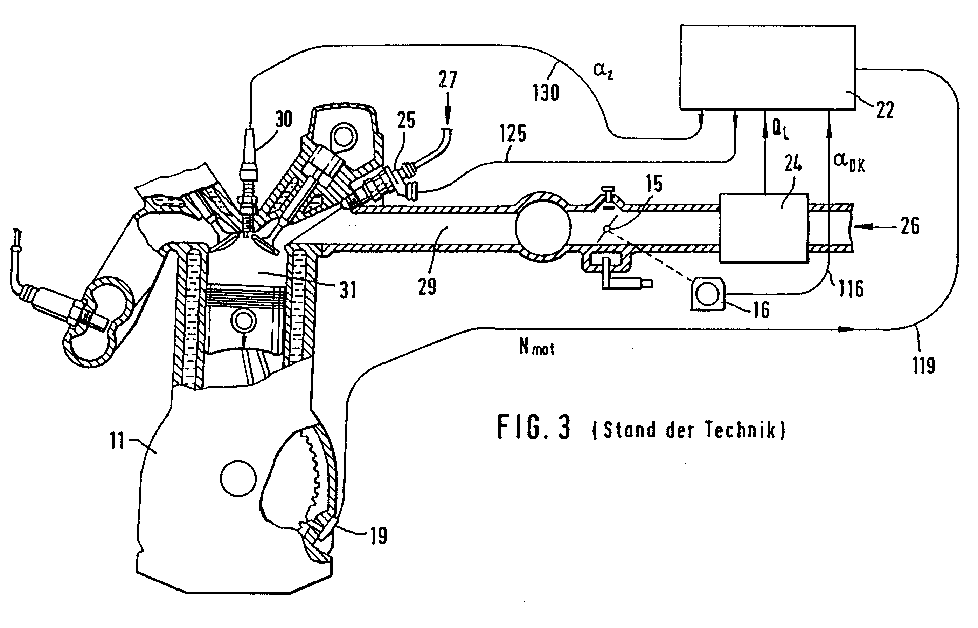

Die Figuren 1 und 3 zeigen als Blockschaltbild den Stand der Technik, während die Figuren 2, 4b, 5a, 5b und 6 Blockschaltbilder der Erfindung offenbaren.

Ausführungsbeispiel

Die Erfindung soll im folgenden anhand verschiedener Ausführungsbeispiele dargestellt werden.

Hierzu zeigt zunächst die Figur 2 ein Übersichtsblockschaltbild, wobei die schon anhand der Figur 1 beschriebenen Blöcke mit den selben Bezugszeichen versehen sind.

Die Figur 2 zeigt ein stufenloses Umschlingungsgetriebe mit der Getriebesteuerung (18), die über die Kopplung (23) mit der Motorsteuerung (22), welche den Verbrennungsmotor (11) steuert, verbunden ist.

Gegenüber der Figur (1) erfolgt eine Kopplung (23) von Motorsteuerung (22) und Getriebesteuerung (18) mit der mehrere Signale von der Motorsteuerung (22) zur Getriebesteuerung (18) übertragen werden können.

Zur Steuerung des Motors (11) erhält die Motorsteuerung (22) über die Verbindungen 116, 119 und 124 verschiedene Signale über den Betriebszustand des Motors. Über die Verbindungen 125 und 130 werden Stellglieder des Motors angesteuert. Hierauf soll anhand der Figur 3 näher eingegangen werden.

Die Figur 3 zeigt ein mögliches Ausführungsbeispiel der Erfassung der Signale (119), (124) und (116) und der Ansteuerung des Verbrennungsmotors (11) mit den Signalen (125) und (130). Abgebildet ist ein Zylinder des Verbrennungsmotors (11). Mit dem Drehzahlsensor (19) wird das Signal (119), die Drehzahl $N_{mot}$ des Motors, gemessen. Durch einen Sensor (24) (Luftmassenmesser) wird die Masse $Q_L$ der in das Saugrohr (29) angesaugten Luft (26) gemessen und als Signal (124) an die Motorsteuerung (22) weitergeleitet. Die Motorsteuerung (22) betätigt mit dem Signal (125) eine Einrichtung (25) zur Zumessung des Kraftstoffs (27). Dieser kann dabei z.B. in das Saugrohr (29) gespritzt werden. Die Einrichtung (25) kann z.B. ein Kraftstoffeinspritzventil sein. Weiterhin erfolgt von der Motorsteuerung (22) aus mit dem Signal (130) die Ansteuerung $\alpha_z$ der Zündkerzen (30) zur Zündung des Kraftstoff-Luft-Gemischs im Inneren des Brennraumes (31) des Verbrennungsmotors (11).

Die Motorsteuerung (22) liefert u.a. Signale (125) und (130) zur Ansteuerung des Verbrennungsmotors (11), die u.a. abhängig von dem Signal (124), das die Masse der vom Verbrennungsmotors (11) angesaugten Luft angibt, ist. Mit einem Signal (119) wird die Drehzahl $N_{mot}$ des Verbrennungsmotors und mit dem Signal (116) die Winkellage $\alpha_{Dk}$ der Drosselklappe der Motorsteuerung (22) zugeleitet.

Verfahren zur Berechnung des zu erwartenden Drehmoments aus den Signalen (119, $N_{mot}$), (124, angesaugte Luft $Q_L$), (116, $\alpha_{Dk}$), (125, Einspritzmenge) und (130, Zündzeitpunkt $\alpha_z$) entsprechen dem Stand der Technik wie er der DE-OS 42 39 711 zu entnehmen ist. Weiterhin kann die Motordrehzahl $N_{mot}$ der Getriebesteuerung (18) zugeführt werden.

Die Motorsteuerung überträgt ein aus dem Signal (124, angesaugte Luft $Q_L$) und dem Motordrehzahlsignal $N_{mot}$ (119) durch Division von (124, $Q_L$) durch (119, $N_{mot}$) gebildetes Lastsignal (123b, $Q_L/N_{mot}$) an die Getriebesteuerung (18). Weiterhin wird auch der Zündzeitpunkt $\alpha_z$ als Signal (123c) von der Motorsteuerung (22) über die Kopplung (23) an die Getriebesteuerung (18) übertragen.

Bei beiden Ausführungsformen können auch die Motordrehzahl (119, $N_{mot}$) und die Winkellage (116, $\alpha_{Dk}$) der Drosselklappe (15) über die Kopplung (23) von der Motorsteuerung (22) zur Getriebesteuerung (18) übertragen werden.

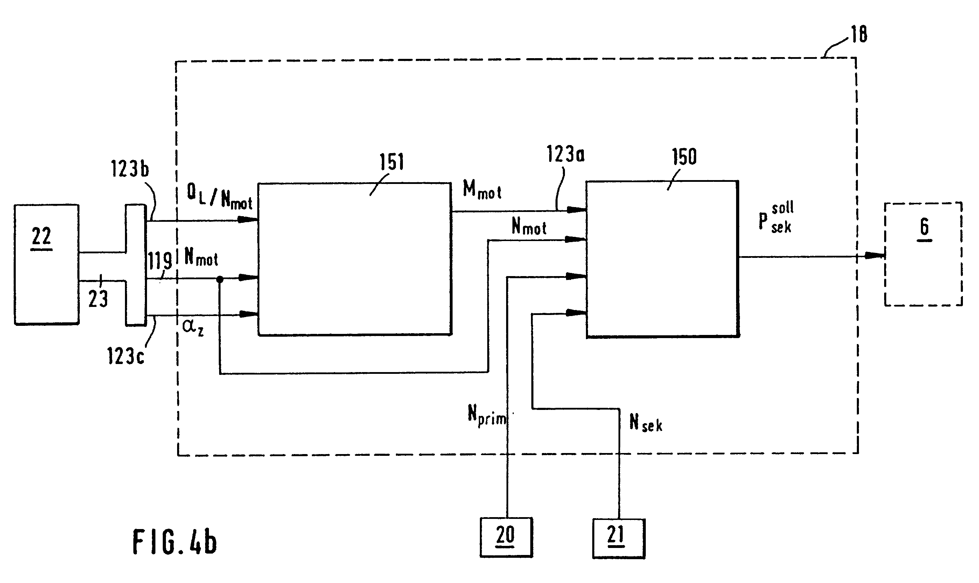

Die Figur 4b zeigt einen relevanten Teil der Getriebesteuerung (18). Wie schon erwähnt wird der Getriebesteuerung (18) über die Kopplung (23) von der Motorsteuerung (22) das Lastsignal (123b, $Q_L/N_{mot}$), der Zündzeitpunkt $\alpha_z$ als Signal (123c) und die momentane Motordrehzahl (Signal 119, $N_{mot}$) zugeführt. Abhängig von diesen Signalen wird im Block (151) je nach Ausführungsvariante das stationäre Motormoment $M_{mot,stat}$ oder das dynamische Motormoment $M_{mot}$ als Signal 123a gebildet und dem Block (150) zugeführt. Im Block (150) wird dann abhängig von dem stationären Motormoment $M_{mot,stat}$, der Primärdrehzahl $N_{prim}$ (Drehzahlsensor 20) und der Sekundärdrehzahl $N_{sek}$ (Drehzahlsensor 21) der Solldruck $P_{sek}^{soll}$ für die Sekundärseite (Ölkammer 6) gebildet. Die Einstellung des gewünschten abtriebsseitigen Öldrucks mit elektrischen und hydraulischen Mitteln kann z.B. nach der eingangs erwähnten EP,A1,0 451 887 erfolgen.

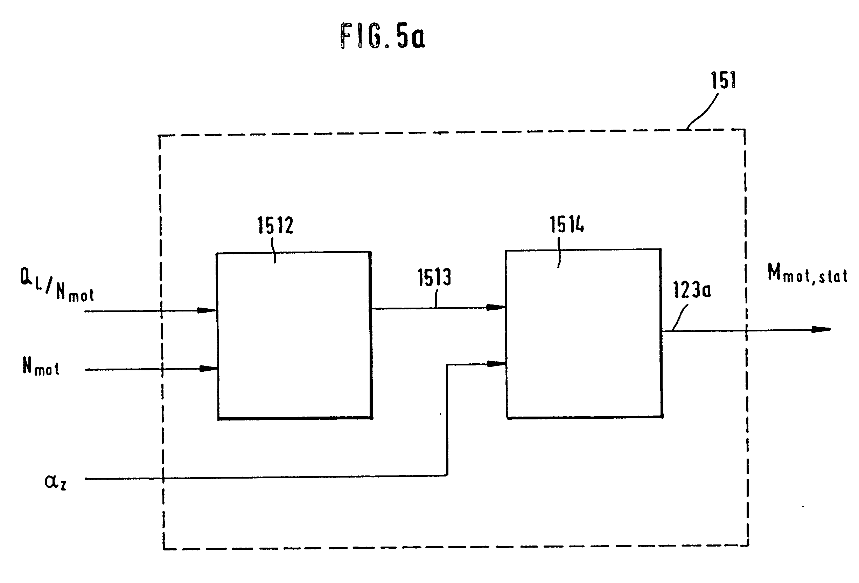

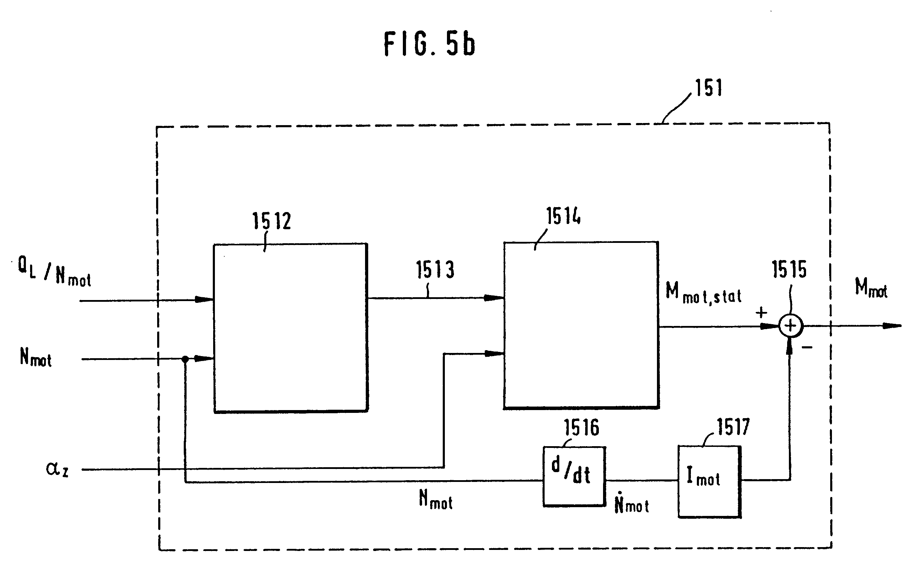

Die nähere Ausgestaltung des Blocks (151) wird anhand der Figur 5a beschrieben. Hierzu zeigt die Figur 5 zunächst den Block Momentenberechnung (1512) zur Berechnung des zu erwartenden stationären Motordrehmoments ($M_{mot,stat}$, Signal 123a). Aus dem Lastsignal ($Q_L/N_{mot}$, Signal 123b) und der Motordrehzahl ($N_{mot}$, Signal 119) wird mit dem Block (1512), der eine Kennfeldberechnung enthält, das Signal (1513) berechnet. In einem zweiten Block (1514) wird aus dem Signal (1513) und dem Zündzeitpunkt ($\alpha_z$, Signal 123c) das zu erwartende stationäre Motordrehmoment ($M_{mot,stat}$, Signal 123a) berechnet.

Eine Ausführungsvariante des Blocks (151) zeigt die Figur 5b. Bei dieser Variante wird berücksichtigt, daß das in den Blöcken (1512) und (1514) gebildete Motormoment $M_{mot,stat}$ dem momentanen stationären Motormoment entspricht, also dem Motormoment bei Konstanthalten der momentanen Motordrehzahl. Um das "dynamische" Motormoment zu erhalten wird zunächst die Motordrehzahl $N_{mot}$ im Block (1516) zeitlich differenziert zu der zeitlichen Änderung $\dot{N}_{mot}$ der Motordrehzahl, dem Motordrehzahlgradienten. Im Block (1517) wird die Trägheit des Motors (11) berücksichtigt. Dies kann beispielsweise dadurch geschehen, indem der Motordrehzahlgradienten $\dot{N}_{mot}$ mit einem für den jeweiligen Motor (11) typischen Trägheitswert $I_{mot}$ multipliziert wird. Die so erhaltene Größe ($\dot{N}_{mot} * I_{mot}$) wird dem stationären Motormoment $M_{mot,stat}$ im Block (1515) überlagert zu dem Motormoment $M_{mot}$.

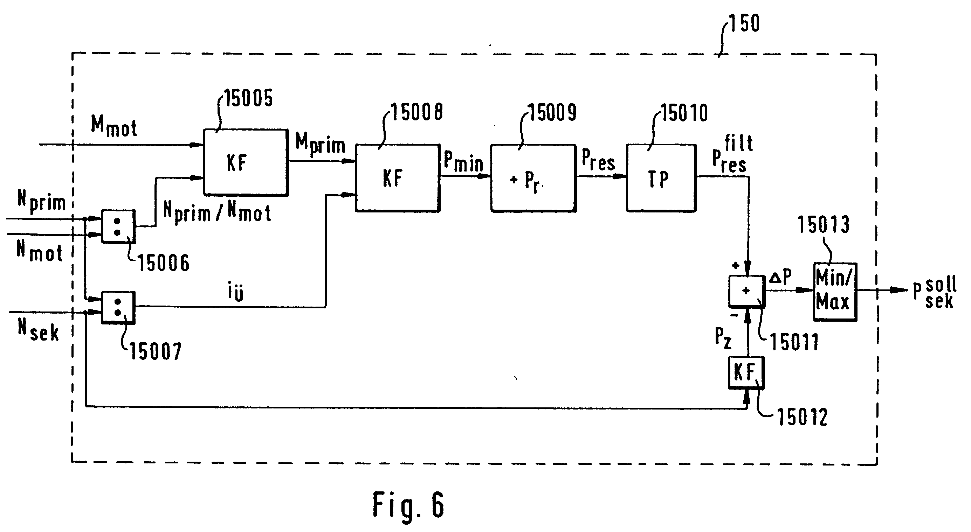

Die nähere Ausgestaltung des Blocks (150, Bandspannungsregler) wird anhand der Figur 6 beschrieben. Hierzu zeigt die Figur 6 ein Blockschaltbild zur Berechnung des benötigten Drucks $P_{sek}^{soll}$ in der Ölkammer (6) zur Einstellung der Spannung des Umschlingungsmittels (1) in der ersten und zweiten Ausführungsform der Erfindung.

Mit dem Block (15006) wird das Signal $N_{prim}/N_{mot}$ als Quotient aus der Primärdrehzahl $N_{prim}$ und der Motordrehzahl $N_{mot}$ gebildet. Das Signal $N_{prim}/N_{mot}$ und das erwartete Motormoment $M_{mot}$ wird in dem Block (15005) mittels einer Kennfeldberechnung in das erwar-

tete Primärdrehmoment $M_{prim}$ umgerechnet. In dem Block (15007) wird die Drehzahlübersetzung $i_{ü}$ des stufenlosen Umschlingungsgetriebes als Quotient der Primärdrehzahl $N_{prim}$ und der Sekundärdrehzahl $N_{sek}$ zu $i_{ü}=N_{prim}/N_{sek}$ berechnet. In dem Block (15008) wird mit einem Kennfeld aus dem zu erwartenden Primärdrehmoment $M_{prim}$ und der Drehzahlübersetzung $i_{ü}$ ein minimaler Solldruck $P_{min}$ berechnet. Zu dem minimalen Solldruck $P_{min}$ wird in dem Block (15009) ein Reservedruck $P_r$ addiert. Das resultierende Signal $P_{res}$ wird in dem Block (15010) mit einem speziellen Tiefpaß gefiltert. Der Filter wirkt jedoch nur, wenn das Signal $P_{res}$ kleiner wird. Wird das Signal $P_{res}$ größer, dann folgt das Ausgangssignal $P_{res}^{filt}$ des Tiefpaßfilters (15010) unmittelbar dem Signal $P_{res}$.

In der Block (15012) wird aus der Sekundärdrehzahl $N_{sek}$ mit einem Kennfeld ein Zentrifugalanpreßdruck $P_z$ berechnet. Dieser Zentrifugalanpreßdruck $P_z$ wird in dem Block (15011) von dem Signal $P_{res}^{filt}$ subtrahiert. Die Differenz $\Delta P$ wird in dem Block (15013) auf minimale und maximale Werte begrenzt. Als Resultat erhält man mit dem Signal $P_{sek}^{soll}$ den erforderlichen Druck in der Ölkammer (6).

**Patentansprüche**

1. System zur Einstellung der Spannung des Umschlingungsteils (1) eines, vorzugsweise in seiner Übersetzung stufenlos verstellbaren, einem Fahrzeugmotor (11) nachgelagerten Umschlingungsgetriebes, wobei die Spannung abhängig von einem das Motormoment des Fahrzeugmotors repräsentierenden Signal ($M_{mot,stat}$, $M_{mot}$) eingestellt wird und erste Mittel (22) zur Steuerung bzw. Regelung des Fahrzeugmotors (11) und zweite Mittel (18) zur Steuerung bzw. Regelung des Umschlingungsgetriebes vorgesehen sind, dadurch gekennzeichnet, daß von den ersten Mitteln (22) zu den zweiten Mitteln (18) ein erstes Signal ($Q_L$), das die dem Fahrzeugmotor (11) zugeführte Luftmasse bzw. Luftmenge repräsentiert, und ein zweites Signal ($\alpha_z$), das den Zündwinkel bzw. den Zündzeitpunkt des Fahrzeugmotors (11) repräsentiert, zugeführt wird, und in den zweiten Mitteln (18) aus dem ersten Signal ($Q_L$) und dem zweiten Signal ($\alpha_z$) das das Motormoment repräsentierende Signal ($M_{mot,stat}$, $M_{mot}$) zur Einstellung der Spannung abgeleitet wird.

2. System zur Einstellung der Spannung des Umschlingungsteils (1) eines, vorzugsweise in seiner Übersetzung stufenlos verstellbaren, einem Fahrzeugmotor (11) nachgelagerten Umschlingungsgetriebes, wobei die Spannung abhängig von einem das Motormoment des Fahrzeugmotors repräsentierenden Signal ($M_{mot,stat}$, $M_{mot}$) eingestellt wird und erste Mittel (22) zur Steuerung bzw. Regelung des Fahrzeugmotors (11) und zweite Mittel (18) zur Steuerung bzw. Regelung des Umschlingungsgetriebes vorgesehen sind, dadurch gekennzeichnet, daß von den ersten Mitteln (22) zu den zweiten Mitteln (18) ein erstes Signal, das die dem Fahrzeugmotor zugeführte Kraftstoffmenge repräsentiert, und ein zweites Signal, das den Zeitpunkt repräsentiert, zu dem der Kraftstoff eingespritzt wird, zugeführt wird, und aus dem ersten Signal und zweiten Signal das das Motormoment repräsentierende Signal zur Einstellung der Spannung abgeleitet wird.

3. System nach Anspruch 1 oder 2, dadurch gekennzeichnet, daß zur Einstellung der Spannung ein das stationäre Motormoment repräsentierendes Signal ($M_{mot,stat}$) herangezogen wird.

4. System nach Anspruch 1 oder 2, dadurch gekennzeichnet, daß zur Einstellung der Spannung ein das dynamische Motormoment repräsentierendes Signal ($M_{mot}$) herangezogen wird.

5. System nach Anspruch 4, dadurch gekennzeichnet, daß ein die Drehzahl des Fahrzeugmotors (11) repräsentierendes Signal ($N_{mot}$) erfaßt wird und das das dynamische Motormoment repräsentierende Signal ($M_{mot}$) unter Berücksichtigung der zeitlichen Änderung ($N_{mot}$) des die Drehzahl des Fahrzeugmotors repräsentierenden Signals ermittelt wird.

6. System nach Anspruch 5, dadurch gekennzeichnet, daß zur Ermittlung des das dynamische Motormoment repräsentierenden Signals ($M_{mot}$) eine die Trägheit des Fahrzeugmotors (11) repräsentierende Größe ($I_{mot}$) berücksichtigt wird.

7. System nach Anspruch 1 oder 2, dadurch gekennzeichnet, daß die Spannung des Umschlingungsteils (1) mittels einer Druckbeaufschlagung wenigstens einer Druckkammer (5.6) geschieht.

**Claims**

1. System for adjusting the tension of the flexible-drive component (1) of a flexible-drive mechanism whose transmission ratio is preferably infinitely adjustable and which is mounted downstream of a vehicle engine (11), the tension being set as a function of a signal ($M_{mot, stat}$, $M_{mot}$) which represents the engine torque of the vehicle engine, and first means (22) being provided for the open-loop and/or closed-loop control of the vehicle engine (11), and a second means (18) being provided for the open-loop and/or closed-loop control of the flexible-drive mechanism, characterized in that a first signal ($Q_L$) which represents the air mass and/or air quantity fed to the vehicle engine (11), and a second signal ($\alpha_z$) which represents the ignition angle and/or the ignition time of the vehicle engine (11), are fed from the first means (22) to the second means (18), and the signal ($M_{mot, stat}$, $M_{mot}$) which represents the engine torque and has the purpose of adjusting the tension is derived in the second means (18) from the first signal ($Q_L$) and the second signal ($\alpha_z$).

2. System for adjusting the tension of the flexible-drive component (1) of a flexible-drive mechanism whose transmission ratio is preferably infinitely adjustable and which is mounted downstream of a vehicle engine (11), the tension being set as a function of a signal ($M_{mot, stat}$, $M_{mot}$) which represents the engine torque of the vehicle engine, and first means (22) being provided for the open-loop and/or closed-loop control of the vehicle engine (11), and second means (18) being provided for the open-loop and/ or closed-loop control of the flexible-drive mechanism, characterized in that a first signal which represents the quantity of fuel fed to the vehicle engine, and a second signal which represents the time at which the fuel is injected, are fed from the first means (22) to the second means (18), and the signal which represents the engine torque and has the purpose of adjusting the tension is derived from the first signal and second signal.

3. System according to Claim 1 or 2, characterized in that a signal ($M_{mot, stat}$) which represents the steady-state engine torque is used to adjust the tension.

4. System according to Claim 1 or 2, characterized in that a signal ($M_{mot}$) which represents the dynamic engine torque is used to adjust the tension.

5. System according to Claim 4, characterized in that a signal ($N_{mot}$) which represents the rotational speed of the vehicle engine (11) is detected, and the signal ($M_{mot}$) which represents the dynamic engine torque is determined taking into account the change ($\dot{N}_{mot}$) over time of the signal which represents the rotational speed of the vehicle engine.

6. System according to Claim 5, characterized in that a variable ($I_{mot}$) which represents the inertia of the vehicle engine (11) is taken into account in order to determine the signal ($M_{mot}$) which represents the dynamic engine torque.

7. System according to Claim 1 or 2, characterized in that the tension of the flexible-drive component (1) is effected by means of an application of pressure of at least one pressure chamber (5.6).

## Revendications

1. Système servant à régler la tension de l'organe d'enroulement (1) d'une transmission à enroulement , que l'on peut régler de préférence de façon continue quant à sa démultiplication, et qui est montée en aval du moteur (11) d'un véhicule, la tension étant réglée en fonction d'un signal ($M_{mot,stat}$, $M_{mot}$)qui représente le couple du moteur du véhicule) et un premier moyen (22) servant à commander ou à régler le moteur du véhicule (11) et un deuxième moyen (18) servant à commander ou à régler la transmission à enroulement étant prévus,
caractérisé en ce que
on fait passer du premier moyen (22) au deuxième moyen (18) un premier signal ($Q_L$), qui représente la masse d'air ou la quantité d'air amenée au moteur du véhicule (11), et un deuxième signal ($\alpha_z$), qui représente l'angle ou l'instant de l'allumage du moteur du véhicule (11), et on prélève dans le second moyen (18) à partir du premier signal ($Q_L$) et du deuxième signal ($\alpha_z$) le signal ($M_{mot,stat}$, $M_{mot}$), qui représente le couple du moteur, pour régler la tension.

2. Système servant à régler la tension de l'organe d'enroulement (1) d'une transmission à enroulement , que l'on peut régler de préférence de façon continue quant à sa démultiplication, et qui est montée en aval du moteur (11) d'un véhicule, la tension étant réglée en fonction d'un signal ($M_{mot,stat}$, $M_{mot}$)qui représente le couple du moteur du véhicule) et un premier moyen (22) servant à commander ou à régler le moteur du véhicule (11) et un deuxième moyen (18) servant à commander ou à régler la transmission à enroulement étant prévus,
caractérisé en ce que
on fait passer du premier moyen (22) au deuxième moyen (18) un premier signal, qui représente la quantité de carburant amenée au moteur du véhicule, et un deuxième signal ($\alpha_z$), qui représente l'instant auquel on injecte le carburant, et on prélève à partir du premier signal et du deuxième signal le signal qui représente le couple du moteur, pour régler la tension.

3. Système selon la revendication 1 ou 2,
caractérisé en ce que
pour régler la tension on utilise un signal ($M_{mot,stat}$) qui représente le couple du moteur stationnaire.

4. Système selon la revendication 1 ou 2,
caractérisé en ce que
pour régler la tension on utilise un signal ($M_{mot}$) qui représente le couple du moteur dynamique.

5. Système selon la revendication 4, caractérisé en ce que l'on détecte un signal ($N_{mot}$), qui représente la vitesse de rotation du moteur du véhicule (11), et l'on détermine le signal ($M_{mot}$), qui représente le couple du moteur dynamique, en prenant en considération la variation dans le temps ($\dot{N}_{mot}$) du signal qui représente la vitesse de rotation du moteur du véhicule.

6. Système selon la revendication 5, caractérisé en ce que pour obtenir le signal (Mmot), qui représente le couple du moteur dynamique on prend en considération une grandeur ($I_{mot}$), qui représente l'inertie du moteur du véhicule (11).

7. Système selon la revendication 1 ou 2, caractérisé en ce que la tension de l'organe d'enroulement (1) est obtenue au moyen de l'alimentation en pression d'au moins une chambre de pression (5, 6).

# FIG.1
( Stand der Technik )

$P_{prim}$

$P_{sek}$

$\alpha_{DK}$

$N_{sek}$

$N_{prim}$

EP 0 797 742 B1

FIG.2

$P_{prim}$

$P_{sek}$

$N_{sek}$

$N_{prim}$

$M_{mot,stat}$ , $N_{mot}$

oder $\left\{\begin{array}{ll} Q_L/N_{mot} & (123b) \\ \alpha_z & (123c) \\ N_{mot} & (119) \end{array}\right.$

EP 0 797 742 B1

FIG. 3 (Stand der Technik)

EP 0 797 742 B1

FIG.4b

EP 0 797 742 B1

# FIG.5a

EP 0 797 742 B1

# FIG. 5b

Fig. 6

EP 0 797 742 B1